# EUROPÄISCHE PATENTSCHRIFT

(11) **EP 2 924 337 B1**
(45) Veröffentlichungstag und Bekanntmachung des Hinweises auf die Patenterteilung: **09.08.2017**
(21) Anmeldenummer: 15161451.8
(22) Anmeldetag: 27.03.2015
(51) Int. Cl.: F21S 8/02, F21V 13/02, F21V 8/00, F21V 7/00, F21Y 115/10, F21Y 103/10

(54) **LEUCHTE MIT EINEM LICHTLEITER ZUR ERZEUGUNG VON ENTBLENDETEM, TEILFLÄCHIGEN LICHT**
LIGHT WITH A LIGHT GUIDE FOR GENERATING GLARE-FREE LIGHT OVER A PARTIAL AREA
ÉCLAIRAGE DOTÉ D'UNE GUIDE D'ONDE POUR GÉNÉRER DE LA LUMIÈRE ANTI-ÉBLOUISSEMENT SUR UNE RÉGION PARTIELLE

(30) Priorität: 28.03.2014 DE 102014104448
(43) Veröffentlichungstag der Anmeldung: 30.09.2015
(73) Patentinhaber: Trilux GmbH & Co. KG, 59759 Arnsberg (DE)
(72) Erfinder: Ganzer, Bernd, 58675 Hemer (DE); Keßler, Björn, 59889 Eslohe (DE)
(74) Vertreter: Lippert Stachow Patentanwälte Rechtsanwälte

(56) Entgegenhaltungen:
- EP-A1- 1 803 993
- EP-A2- 1 035 369
- EP-A2- 2 626 621
- WO-A1-2014/038117
- DE-A1- 10 116 040
- KR-U- 20100 006 137
- US-A- 6 161 939
- US-A1- 2008 310 158
- US-A1- 2009 323 329
- US-A1- 2010 046 217

## Beschreibung

Die Erfindung betrifft eine Leuchte mit einem Leuchtengehäuse umfassend eine Lichtaustrittsfläche, einem in dem Leuchtengehäuse angeordneten Leuchtmittel umfassend LEDs zur Erzeugung eines Lichtstroms sowie elektrische Betriebsgeräte zum Betrieb des Leuchtmittels, sowie einem in Strahlungsrichtung vor dem Leuchtmittel angeordneten Lichtleiter, welcher das Licht auf einer Teilfläche der Lichtaustrittsfläche verteilt und/oder entblendet.

Der Lichtleiter hat die Funktion, das punktuell von den LEDs erzeugte Licht über eine möglichst große Fläche zu verteilen und somit die die Leuchtdichte zu reduzieren, um Blendung von Benutzern zu vermeiden. Der Lichtleiter realisiert damit eine Entblendung. Die primäre Entblendung wird jedoch durch den Reflektor realisiert, der die Entblendung durch Senkung des Lichtstrahls über einen Winkel von 60° mit der Horizontalen in bekannter Weise realisiert.

Das von den LEDs ausgestrahlte Licht strahlt neben dem Bereich unmittelbar in Strahlungsrichtung vor den LEDs (Direktbereich) teilweise in seitlich neben der LED-Leiste gelegene, durch den Lichtleiter und das Leuchtengehäuse als Lichträume ausgebildete Hohlräume und erhellt insofern zusätzlich den Lichtleiter zur Erzeugung von indirektem Licht, weshalb dieser seitlich Bereich auch als "Indirektbereich" bezeichnet wird.

EP 2 626 621 offenbart eine Leuchte gemäß dem Oberbegriff des Anspruchs 1.

### Nachteile am Stand der Technik

Allerdings muss das Licht hierzu auch das Material des Lichtleiters oberhalb der LEDs von der LED-Leiste durchdringen, was mit einem Lichtverlust verbunden ist und auch eine unpräzisere Lichtverteilungskurve realisiert.

Gemäß verschiedenen Richtlinien, insbesondere der SELV (Safety Extra Low Voltage)- Richtlinie muss gewährleistet sein, dass ein definierter Normfinger keinen Zugang zu elektrisch leitenden Teilen hat und gegen volles Massepotenzial anliegen kann.

Zu diesem Zweck ist beim Stand der Technik der Lichtleiter oberhalb von stromführenden Bauteilen angeordnet, insbesondere auch über der LED-Leiste, so dass der Normfinger auf diesen nicht zugreifen kann. Andererseits ist optisch wünschenswert, die Fläche in Strahlungsrichtung direkt vor den LEDs frei zu lassen, um die Lichtverteilungskurve und die Lichtausbeute zu optimieren.

### Aufgabe

Ausgehend von diesem Stand der Technik liegt der Erfindung die Aufgabe zugrunde, diese Nachteile zumindest teilweise zu vermeiden und insbesondere eine Leuchte sowie einen Lichtleiter für eine Leuchte mit verbesserter Lichtverteilungskurve, insbesondere eine gleichmäßig, also homogen leuchtende Lichtaustrittsfläche der Leuchte zu realisieren, wobei gleichzeitig der erwähnten SELV-Richtlinie entsprochen wird.

Diese Aufgabe kann bei einer Leuchte der eingangs genannten Art auf unterschiedliche Weisen gelöst werden.

Eine erste Lösung sieht vor, dass der Lichtleiter in einen in Einbaulage in dem Direktbereich in Strahlungsrichtung unmittelbar vor den LEDs aus einem klaren, also besonders gut lichtdurchlässigen Kunststoff besteht, welcher das von den LEDs ausgestrahlte Licht unmittelbar und ohne Diffusion durchtreten lässt, wohingegen der seitlich neben diesem Direktbereich gelegener "Indirektbereich" des aus einem diffuses Licht erzeugenden Kunststoff zur Verwirklichung der Entblendung besteht bzw. diesen umfasst. Der Lichtleiter kann z.B. im 2-K-Verfahren gefertigt sein, wobei der vorzugsweise mittlere "Direktbereich" und der sich seitlich oder auch beidseitig anschließende "Indirektbereich" aus einem lichttechnisch geeigneten, aber diffuses Licht erzeugenden Kunststoff gefertigt ist oder diesen umfasst, insbesondere PMMA.

Eine weitere Lösung sieht vor, dass der Direktbereich einen Einsatz aus klarem Kunststoff umfasst, welcher mit dem ansonsten diffuses Licht erzeugenden Lichtleiter bzw. Rahmen verbindbar ist.

Beide dieser Lösungen sehen weiterhin die Abdeckung des Direktbereichs des Lichtleiters unmittelbar vor den LEDs der LED-Leiste vor, so dass dieser Lichtleiter SELV-konform ist.

Bei der Entwicklung der erfindungsgemäßen Lösung wurde erkannt, dass für die SELV-Konformität eigentlich keine Abdeckung der spannungsführenden Bauteile erforderlich ist, sondern eigentlich ein Distanzelement ausreicht, welches den Prüffinger unter allen Umständen weit genug von den stromführenden Bauteilen beabstandet.

Eine bevorzugte Weiterentwicklung sieht vor, den Reflektor aus einem diffuses Licht, also Entblendungseigenschaften aufweisenden Kunststoff herzustellen, in dem Direktbereich unmittelbar vor den LEDs aber Lichtöffnungen in dem ansonsten z.B. trüben Lichtleiter vorzusehen, durch welche das Licht somit unmittelbar hindurchtreten kann.

Da bei dieser Lösung wieder das Problem einer unzureichenden Entblendung auftreten kann, sieht die bevorzugte Lösung einen zusätzlichen Einsatzreflektor vor, der bevorzugt in die Lichtöffnung umgebend mit dem Lichtleiter verbindbar ist. Dieser Einsatzreflektor kann auch als Kunststoffspritzgussteil ausgestaltet sein und ist vorzugsweise mit einer reflektierenden Schicht versehen, insbesondere einer hoch reflektierenden Beschichtung, z.B. einer aufgedampften Metallschicht zur Optimierung der Reflexions- und/oder Entblendungseigenschaften. Besonders seien hier die unter der Marke MIRO bezeichneten Oberflächen erwähnt, die eine Lichtgesamtreflexion von 95 % ermöglichen. Mit diesen MIRO-Oberflächen lassen sich beliebige Reflexionsverhalten realisieren.

Durch das Vorsehen der lichttechnisch sehr vorteilhaften Lichtöffnung(en) innerhalb des Lichtleiters in dem Direktbereich vor den LEDs besteht allerdings das vorgenannte Problem mit SELV-Richtlinie, bei welcher ein nach DIN genormter Prüffinger die Oberfläche der stromführenden LEDs berühren könnte.

Zur Realisierung der SELV-Konformität ist deshalb erfindungsgemäß ein oberseitiges, also in Einbaulage in Richtung des eindringenden Normfingers vorstehendes Distanzelement vorgesehen, welches den Normfinger ausreichend von spannungsführenden Bauteilen beabstandet und somit einen Kontakt wirksam unterbindet.

Das Vorsehen des Distanzelements auf der dem Prüffinger ausgesetzten Oberseite des Lichtleiters im unmittelbaren Bereich der Lichtöffnung(en) hat den Vorteil, dass dieses den Lichtaustritt in den Lichtleiter und/oder den Einsatzreflektor nicht behindert und somit keine Einschränkung auf die Lichtverteilungskurve darstellt bzw. die Realisierung beliebiger Lichtverteilungskurven ermöglicht.

Das Distanzelement kann unterschiedlich ausgebildet sein. Eine Lösung umfasst einen Abstandskragen bzw. -steg an der Oberseite der bzw. den Lichtöffnung(en) des Lichtleiters. Dieser Abstandskragen steht vorzugsweise 1 - 2 mm von der Oberfläche des Lichtleiters vor.

Vorzugsweise ist das Distanzelement ausgebildet zum lichttechnisch optimierten Zusammenwirken mit einer Lichteintrittsöffnung des Einsatzreflektors, z.B. indem die Lichteintrittsöffnung des Einsatzreflektors in Einbaulage außenseitig an dem Abstandskragen anliegt. Eine andere Lösung sieht vor, dass der Oberkragen ausgebildet ist zum übergangslosen Anschluss an die Lichteintrittsöffnung, die Geometrie der Lichteintrittsöffnung also der Geometrie des Abstandskragens entspricht.

Der Lichtleiter kann zumindest abschnittsweise ausgebildet sein zur Kaschierung von elektrischen und/oder elektronischen Betriebsgeräten bzw. Komponenten, z.B. in dem seitlich neben dem Direktbereich angeordneten Lichtraum im Indirektbereich.

Der Abstandskragen muss nicht durchgängig geschlossen sein, sondern kann auch lichttechnisch optimierte bzw. bedarfsgerecht ausgebildete Unterbrechungen aufweisen, so dass ein umlaufender Abstandskragen mit burgzinnenartigen Unterbrechungen gebildet wird.

Bei einer bevorzugten Weiterentwicklung umfasst der Lichtleiter für die vorgeschlagene teilflächige Leuchte ferner eine Insektenschutzvorrichtung zur Vermeidung des Eindringens von Insekten in den Innenraum der Leuchte. Diese ist zweckmäßig, weil es sich durch die Lichtöffnungen um ein "offenes", also ein von außen unmittelbar zugängliches System handelt, so dass Insekten also in das Innere der Leuchte eindringen können, welche später tot auf der Innenseite der Leuchte aufliegen. Hierzu kann der Lichtleiter an seiner den LEDs zugewandten Oberseite mindestens einen Obersteg aufweisen, welcher sich seitlich neben den LEDs erstreckt und so das Eindringen von Insekten in die Leuchte verhindert. In der besonders bevorzugten Ausführungsform umfasst die Insektenschutzvorrichtung Oberleisten, die sich in Einbaulage seitlich neben den LEDs der LED-Leiste in einem Abstand zu diesen erstrecken zur Abschirmung der Lichträume neben dem Direktbereich.

Bei einer lichttechnisch optimierten und auch besonders sicheren erfindungsgemäßen Lösung umfasst das Distanzelement sich vom Rand der Lichtöffnung zu den LEDs erstreckende und nach oben ragende Vorsprünge. Wichtig ist dabei, dass diese Vorsprünge somit in Einbaulage direkt neben dem zugehörigen LED Chip gelegen sind, so dass geringere lichttechnische Beeinflussung auftritt und die Lichteintrittsöffnung des Einsatzreflektors nicht behindert. Vorzugsweise umfasst die Oberfläche der Vorsprünge nur im Bereich von 10 bis 30 Prozent, vorzugsweise 20 Prozent der Lichtöffnung. Diese Vorsprünge mit ihrer im Verhältnis zum Oberkragen deutlich größeren Oberfläche haben den Vorteil, dass diese deutlich größere Anpresskräfte des Prüffingers von 10 Newton und mehr ohne Verformung abfangen können.

Gegenstand der Erfindung ist also eine Leuchte mit einem Leuchtengehäuse, umfassend eine Lichtaustrittsfläche, ein LEDs umfassendes Leuchtmittel zur Erzeugung eines Lichtstroms sowie Betriebsgeräte zum Betrieb des Leuchtmittels und einem in Strahlungsrichtung vor den LEDs angeordneten Lichtleiter, welcher das Licht auf einer Teilfläche der Lichtaustrittsfläche verteilt und/oder entblendet, wobei der Lichtleiter den LEDs zugeordnete Lichtöffnungen aufweist und der Lichtleiter auf seiner Oberfläche eine als Distanzelement fungierende Schutzvorrichtung aufweist, dadurch gekennzeichnet, dass die Schutzvorrichtung Vorsprünge umfasst.

Bevorzugte Materialien für die Fertigung des Lichtleiters sind optische Kunststoffe, vorzugsweise z.B. PMMA oder für einfachere Ausführungsformen auch PC.

Die Leuchte ist insbesondere auch gut in Kassettendecken in abgehängten Decken einsetzbar und kann dort zur Beleuchtung von Teilflächen dieser Flächen verwendet werden.

Vorzugsweise sind die Lichtleiter und die darüber bzw. oberhalb von diesen angeordneten LED-Leisten umfassend mehrere linear hintereinander angeordnete und voneinander beabstandete LEDs in Längserstreckungsrichtung in dem Leuchtengehäuse angeordnet, so dass das Licht durch die Lichtleiter auf deren Oberfläche verteilt aus der durch die Lichtaustrittsfläche an der Vorderseite der Leuchte austritt, und zwar so, dass nur der Lichtleiter erleuchtet ist. Insofern ist nicht die gesamte vordere Lichtaustrittsfläche der Leuchte erleuchtet, sondern nur der Bereich der Lichtleiter, weshalb bei dieser Leuchte auch von einer Leuchte mit "teilflächigem Licht" gesprochen wird.

Die erfindungsgemäße Leuchte kann so ausgebildet sein, dass die Lichtleiter mit dem Leuchtengehäuse Lichträume definieren bzw. einschließen, die auch andere geometrische Ausgestaltungen aufweisen können bzw. von dem restlichen Leuchtengehäuse durch einen Absatz oder eine Wand von dem restlichen Leuchtengehäuse abgesetzt oder abgetrennt sein können. Vorzugsweise tritt das durch die LED-Leisten ausgestrahlte Licht in diesem Lichtraum ein und wird innerhalb des Lichtraums reflektiert, wozu die Wände des Lichtraums entweder selbst als Reflektoren ausgebildet oder zumindest mit einer reflektierenden Farbe bzw. Beschichtung ausgestattet sind.

In der Beschreibung wird auf die beigefügten Zeichnungen Bezug genommen, die Teil dieser bilden und zur Veranschaulichung bevorzugter Ausführungsformen der Erfindung dienen. In dieser Hinsicht wird Richtungsterminologie wie etwa "oben", "unten", "vorne", "hinten", "vorderes", "hinteres", usw. in Bezug auf die Orientierung in der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle und logische Änderungen vorgenommen werden können, ohne von dem Schutzumfang der vorliegenden Erfindung abzuweichen. Die folgende ausführliche Beschreibung ist nicht im einschränkenden Sinne aufzufassen. Ferner werden im Rahmen dieser Beschreibung Begriffe wie Anführungszeichen "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischen Bezugszeichen versehen, soweit dieses zweckmäßig ist. Es zeigen:

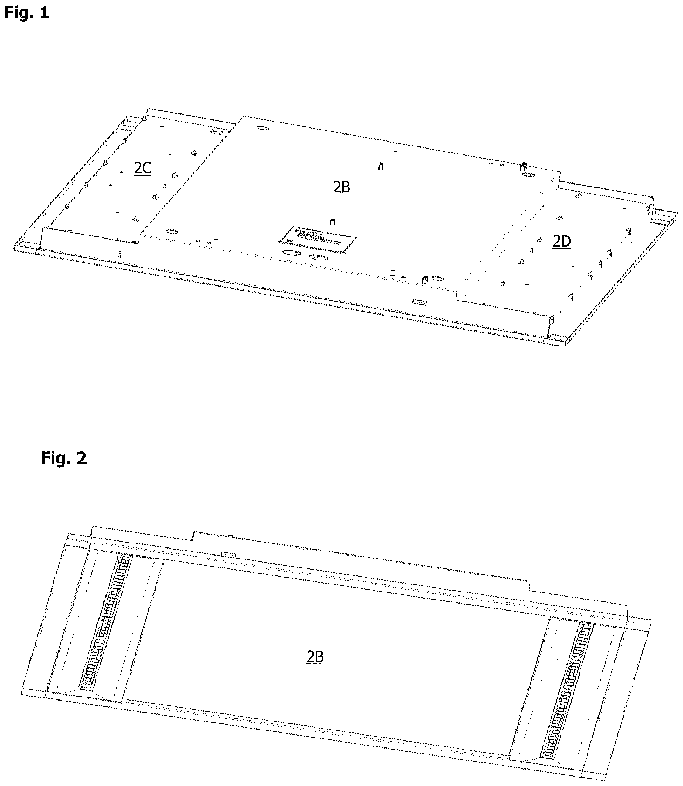

- Figur 1:: eine perspektivische Draufsicht auf das Leuchtengehäuse einer gattungsgemäßen Leuchte;
- Figur 2:: eine perspektivische Ansicht der Leuchte von unten mit zwei an entgegengesetzten Enden angeordneten Entblendungsvorrichtung;
- Figur 3:: einen vergrößerten Abschnitt eines Längsschnitts der Leuchte gemäß Figur 1;
- Figur 4:: einen vergrößerten perspektivischen Querschnitt durch einen Lichtraum;;
- Figur 5:: eine vergrößerte Ansicht des Direktbereichs eines Lichtleiters;
- Figur 6:: eine vergrößerte perspektivische Draufsicht einer erfindungsgemäßen Leuchte mit einem alternativen Lichtleiter und mit einem Prüffinger;
- Figur 7:: eine weitere vergrößerte Draufsicht des Lichtleiters gemäß Figur 6;
- Figur 8:: einen vergrößerten Querschnitt des Lichtleiters mit dem Prüffinger entlang der Linie VIII - VIII gemäß Figur 6; und
- Figur 9:: eine Explosionsdarstellung einer Baugruppe umfassend eine LED-Leiste, einen Lichtleiter, einen Lichtleiterhalterahmen sowie einen Einsatzreflektor.

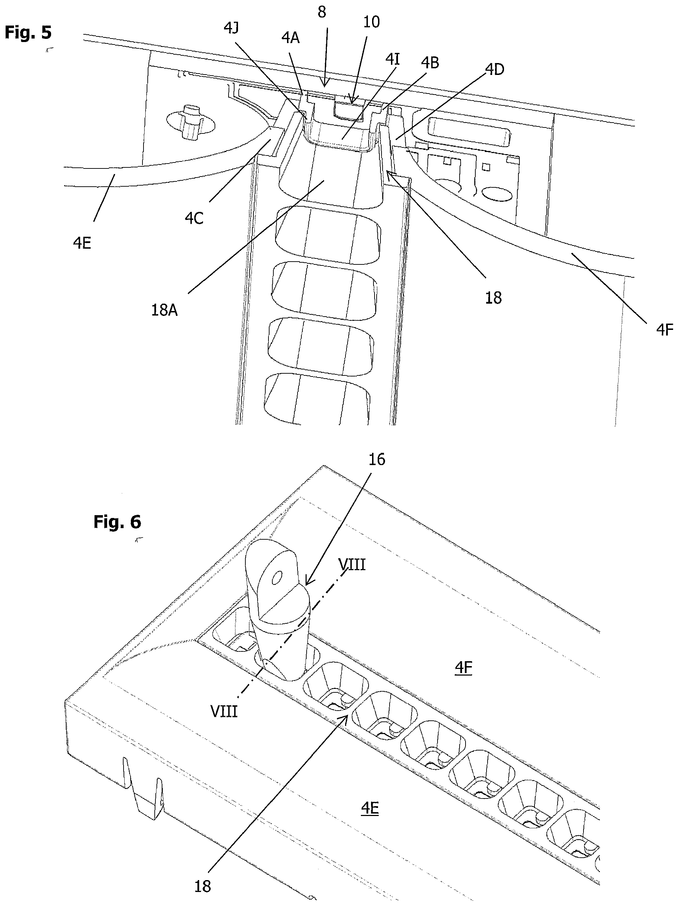

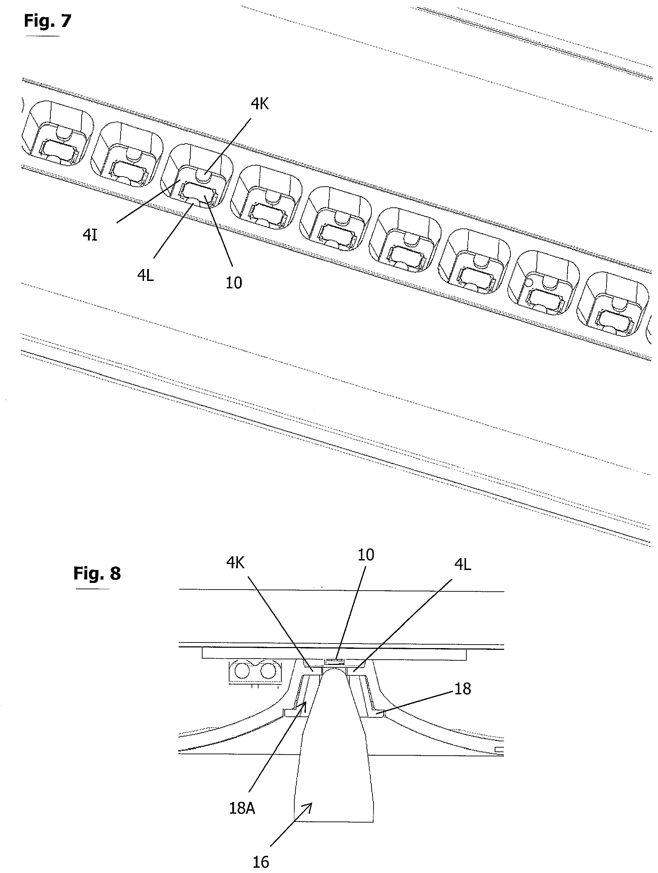

Zur Verdeutlichung ist in den Figuren 6, 7 und 8 ferner ein Koordinatensystem eingezeichnet. Somit liegt die X-Achse in der Querrichtung der Leuchte, die Z-Achse in der Längsrichtung und die Y-Achse in der Höhe der Leuchte.

Die erfindungsgemäße Leuchte besteht demnach im Wesentlichen aus einem kastenförmigen Leuchtengehäuse 2, vorzugsweise gefertigt aus einem gekanteten Profilblech, dessen hintere, in Einbaulage entgegen der Lichtstrahlungsrichtung in Richtung einer Decke angeordnete Oberseite geschlossen, dessen Vorderseite offen ist und eine vordere Lichtaustrittsfläche definiert, die von einem flanschartig umlaufenden Rahmen 2A eingefasst ist, dessen freie Enden zur Erhöhung der Biegesteifigkeit nochmals nach oben gefalzt sind. Das Leuchtengehäuse 2 weist in der Mitte und sich etwa über zwei Drittel der Breite der Leuchte erstreckenden Anschlussraum 2B auf, an welchen sich beidseitig mit Absätzen flacher ausgebildete Lichträume 2C, 2D, anschließen, die dann schließlich in den Rahmen 2A übergehen. Diese Lichträume 2C, 2D werden vorderseitig durch transluzente Lichtleiter 4, 6 verschlossen, welche auf LED-Leisten angeordnete LEDs abdecken, die sich in Längserstreckungsrichtung der Leuchte kollinear zueinander erstrecken.

Die vorderen Enden bzw. Kanten der Lichtleiter 4, 6 schließen übergangslos mit der vorderen Lichtaustrittsfläche ab und der Bereich zwischen den Lichtleitern 4, 6 ist durch einen abnehmbaren, plattenförmigen Verschlussdeckel 2E verschlossen, der vorzugsweise durch Verschlussfedern oder Magnete gehalten wird. Hinter diesem Verschlussdeckel 2E ist der Anschlussraum 2B der Leuchte ausgebildet, der gegenüber den seitlichen Lichträumen für die Lichtleiter 4, 6 erhöht ist, und zwar etwa um ein Drittel der Gesamthöhe des Leuchtengehäuses 2. In diesem Anschlussraum sind elektrische und/oder elektronische Komponenten der Leuchte angeordnet.

Jeder Lichtleiter 4, 6 ist ausgebildet als transluzentes, einstückiges Spritzgussteil mit einem mittleren Quersteg zur Bildung eines Direktbereichs, der sich in Einbaulage quer über die LEDs 10 der LED-Leiste 8 erstreckt und an den Enden mit zwei oberseitigen, sich quer zur Längsrichtung und in einem Abstand parallel zueinander erstreckenden Oberstegen 4A, 4B versehen ist, die zusammen mit dem Quersteg die LEDs 10 brückenartig überspannen und gleichzeitig als Insektenschutzvorrichtung dienen. Ferner ist jedes Ende des mittleren Querstegs mit einem zunächst linear nach unten ragenden Arm 4C, 4D ausgebildet, welcher sich in dem linearen Abschnitt zunächst recht steil (vorliegend in einem Winkel von ca. 20 Grad zur Vertikalen bzw. 110 Grad zu Horizontalen) nach unten erstreckt und somit eine den Direktbereich einfassende Lichtrinne mit einer Höhe von etwa 7 mm und einer Breite von etwa 21 mm am Fuß aufweist, was einem bevorzugten Verhältnis von 1 zu 3 (Breite/Höhe) entspricht, und sodann beidseitig in flügelartig geschwungene, in Querrichtung ersteckende Lichtflächen 4E, 4F gleicher Größe übergeht, welche sich über das dreifache des Direktbereichs in Querrichtung nach außen erstrecken zur Bildung von an den mittleren Direktbereich angrenzende Indirektbereiche. An den äußeren Enden gehen die Lichtleiter schließlich in nach oben ragende, lineare Außenstege 4G, 4H über, welche sich bis zur inneren Oberseite der Lichträume 2C, 2D erstrecken und die Lichträume 2C, 2D in Einbaulage insofern außenseitig einfassen.

In Strahlungsrichtung unmittelbar vor den LEDs 10 sind diesen zugeordnete, rechteckige Lichtöffnungen 4I vorgesehen, welche das von der den LEDs 10 ausgestrahlte Licht somit unmittelbar zur Erzeugung des direkten Lichts unmittelbar unten durchtreten lassen.

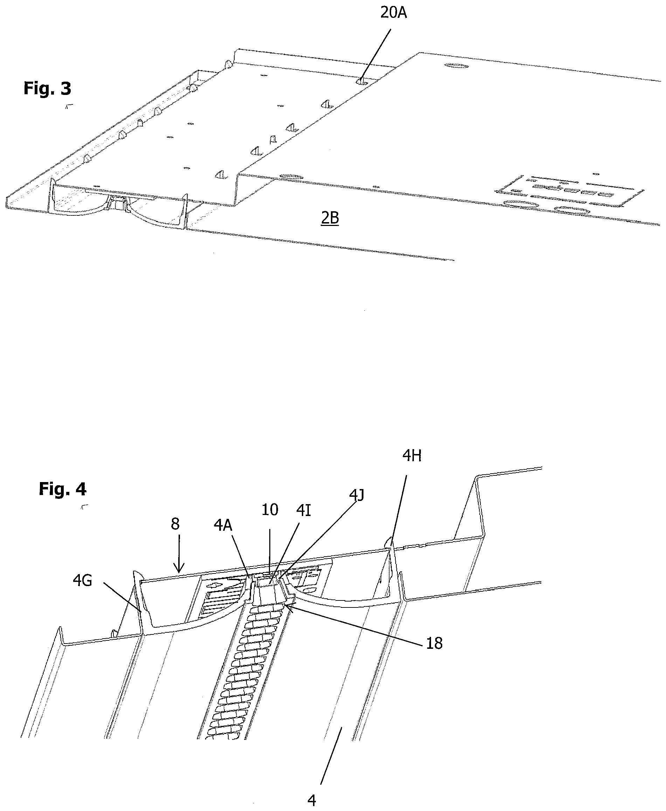

Für jede LED 10 auf der LED-Leiste 8 ist innerhalb des Direktbereichs des Lichtleiters 4, 6 eine solche Lichtöffnung 4I vorgesehen. Die in den Figuren 4 und 5 dargestellte Ausführungsform weist an der Unterseite jeder Lichtöffnung 4I in Strahlungsrichtung ragende Abstandskragen 4J auf, die sich umfänglich entlang der gesamten Unterseite der Lichtöffnung 4I quer zu dieser Lichtöffnung nach unten erstrecken. Durch diese umlaufenden Abstandskragen 4J kann der in den Figuren 6, 8 und 9 dargestellt Prüffinger 16 somit nicht mehr weit genug zur Berührung der stromführenden Bauteile in die Lichtöffnungen 4I eindringen, so dass die SELV-Konformität gewährleistet ist.

Zusätzlich sind in die Lichtrinnen der Lichtleiter 4, 6 zur Entblendung Einsatzreflektoren 18 eingeschnappt, welche für jede Lichtöffnung 4I der Lichtleiter 4, 6 eine sich in Strahlrichtung pyramidal oder auch konisch aufweitende Reflektorfläche 18A aufweist. Die Höhe der Reflektorfläche bestimmt sich in Abhängigkeit von der geometrischen Anordnung von dem Reflektor zur LED so, dass ein von der äußersten Kante der LED unter Einschluss eines Winkels von kleiner oder gleich 60 Grad zu der von der Oberfläche der LED definierten Ebene auf die Innenseite des Reflektors tritt und das Licht so entblendet wird. Vorliegend ist der Einsatzreflektor 18 mit einer aufgedampften Aluminiumschicht versehen zur Erhöhung der Reflexionseigenschaft. Dieser Einsatzreflektor 18 dient als Entblendungsvorrichtung zur Vermeidung eines direkten Einblicks von einem Benutzer auf die LEDs 10 bis zu einem Winkel von 60° unterhalb bzw. mit der Horizontalen.

Die Figuren 6 bis 8 zeigen ein alternativ ausgebildetes Distanzelement, welches im Bereich unmittelbar neben den rechteckigen LEDs 10 sich vom Rand der Lichtöffnung 4I zu den LEDs 10 erstreckende Vorsprünge 4K, 4L anstelle der Abstandsstege 4J aufweist, welche ebenfalls das Eindringen des Prüffingers 16 in die Lichtöffnung 4I unterbinden. Diese Vorsprünge 4K, 4L erstrecken sich der Länge in Z-Richtung nur etwa über ein Drittel der Länge der LEDs 10 und haben gleichwohl den Vorteil, dass sie aufgrund der größeren Fläche wesentlich größere Anpresskräfte von über 10 Newton ohne bleibende Beschädigung aufnehmen können und somit einen noch besseren SELV-konformen Spannungsschutz ermöglichen.

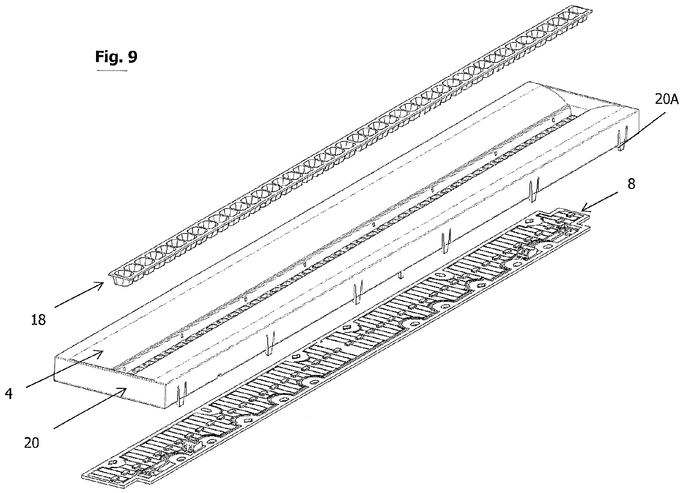

Die Figur 9 zeigt eine Explosionsdarstellungen der Baugruppe umfassend die LED-Leiste 8, einen durch einen diesen umgebenden Lichtleiterrahmen 20 vollumfänglich eingefassten Lichtleiter 4, 6 sowie den Einsatz Reflektor 18. Durch den Rahmen 20 ist der Lichtleiter 4, 6 mittels mehrerer, in Längsrichtung voneinander beabstandeter Rastnasen 20A in korrespondierende Öffnungen in der Oberseite des Leuchtengehäuses 2 im Bereich der Lichträume 2C, 2D eingeschnappt. Alternativ kann der Lichtleiter 4,6 ohne einen zusätzlichen Lichtleiterrahmen 20 unmittelbar mit Befestigungsmitteln zur Befestigung an dem Leuchtengehäuse ausgestattet sein.

Es liegt im Rahmen der Erfindung, auch nur einen Indirektbereich, also einen einseitigen Lichtraum neben dem Direktbereich vorzusehen. Ferner ist für den Fachmann verständlich, dass die beschriebene Erfindung wesentlich die Baugruppe umfassend die LED-Leiste, den Lichtleiter und den Einsatzreflektor betrifft und diese Baugruppe zur Erzeugung von teilflächigem Licht losgelöst von der konkreten Leuchte unter Schutz gestellt werden kann. Die Erfindung schlägt durch die vorgeschlagenen Lösungen mit den LEDs zugeordneten Lichtöffnungen und dem Distanzelement somit einen lichttechnisch optimierten Lichtleiter mit geringstmöglichen Lichtverlusten und gleichzeitiger optimierter Entblendung vor.

### Bezugszeichenliste

- 2: Leuchtengehäuse
- 2A: Rahmen
- 2B: Anschlussraum
- 2C: Lichtraum
- 2D: Lichtraum
- 2E: Verschlussdeckel
- 4: Lichtleiter
- 4A: Obersteg
- 4B: Obersteg
- 4C: Arm
- 4D: Arm
- 4E: Lichtfläche
- 4F: Lichtfläche
- 4G: Außensteg
- 4H: Außensteg
- 4I: Lichtöffnung
- 4J: Abstandskragen
- 4K: Vorsprung
- 4L: Vorsprung
- 6: Lichtleiter
- 8: LED-Leiste
- 10: LED
- 16: Prüffinger
- 18: Einsatzreflektor
- 18A: Reflektorfläche
- 20: Lichtleiterhalterahmen
- 20A: Rasthaken

## Patentansprüche

1. Leuchte mit einem Leuchtengehäuse (2) umfassend eine Lichtaustrittsfläche, ein LEDs (10) umfassendes Leuchtmittel zur Erzeugung eines Lichtstroms sowie Betriebsgeräte zum Betrieb des Leuchtmittels und einem in Strahlungsrichtung vor den LEDs (10) angeordneten Lichtleiter (4,6), welcher das Licht auf einer Teilfläche der Lichtaustrittsfläche verteilt und/oder entblendet, wobei der Lichtleiter (4,6) den LEDs (10) zugeordnete Lichtöffnungen (4I) aufweist und der Lichtleiter (4,6) auf seiner Oberfläche eine als Distanzelement fungierende Schutzvorrichtung aufweist, **DADURCH GEKENNZEICHNET, dass** die Schutzvorrichtung Vorsprünge (4K,4L) umfasst.

2. Leuchte nach Anspruch 1, **DADURCH GEKENNZEICHNET, dass** die Fläche der Vorsprünge (4K, 4L) bis zu 20 Prozent der Fläche der Lichtöffnung (4I) beträgt.

3. Leuchte nach Anspruch 1 oder 2, **DADURCH GEKENNZEICHNET, dass** der Lichtleiter (4,6) ein diffuses Licht erzeugendes, transluzentes Material umfasst und in einem Direktbereich unmittelbar in einer Strahlungsrichtung vor den LEDs (10) ein transparentes Material aufweist.

4. Leuchte nach Anspruch 3, **DADURCH GEKENNZEICHNET, dass** das transparente Material in dem Direktbereich in den Lichtleiter (4,6) einsetzbar ausgebildet ist.

5. Leuchte nach einem der vorhergehenden Ansprüche, **DADURCH GEKENNZEICHNET, dass** der Lichtleiter (4,6) eine Lichtrinne aufweist und dass ein Einsatzreflektor (18) in diese Lichtrinne einsetzbar ist.

6. Leuchte nach Anspruch 5, **DADURCH GEKENNZEICHNET, dass** die die Höhe der Lichtrinne etwa 3 Mal so groß ist wie deren Breite.

## Claims

1. A luminaire, comprising a luminaire housing (2) having a light exit surface, a luminous means comprising LEDs (10) for generating a luminous flux, and operating devices for operating the luminous means, and an optical conductor (4, 6) arranged in front of the LEDs (10) in the direction of radiation, which optical conductor distributes the light on a section of the light exit surface and/or suppresses the glare thereof, wherein the optical conductor (4, 6) comprises light apertures (4I) which are assigned to the LEDs (10), and the optical conductor (4, 6) has, on its surface, a protective apparatus acting as a spacer element, **CHARACTERIZED IN THAT** the protective apparatus comprises projections (4K, 4L).

2. A luminaire according to claim 1, **CHARACTERIZED IN THAT** the area of the projections (4K, 4L) is up to 20 percent of the area of the light aperture (4I).

3. A luminaire according to claim 1 or 2, **CHARACTERIZED IN THAT** the optical conductor (4, 6) comprises a diffuse light-generating, translucent material and has a transparent material in a direct region which is situated directly in front of the LEDs (10) in the direction of radiation.

4. A luminaire according to claim 3, **CHARACTERIZED IN THAT** the transparent material is designed to be insertable into the optical conductor (4, 6) in the direct region.

5. A luminaire according to one of the preceding claims, **CHARACTERIZED IN THAT** the optical conductor (4, 6) has a light channel and that an insert reflector (18) can be inserted into said light channel.

6. A luminaire according to claim 5, **CHARACTERIZED IN THAT** the height of the light channel is about 3 times as large as its width.

## Revendications

1. Luminaire avec un boîtier de lampe (2) comprenant une surface de sortie de la lumière, une lampe comprenant des DEL (10) pour produire un flux lumineux et des appareils d'exploitation pour l'exploitation de la lampe et avec un guide d'ondes lumineuses (4, 6) disposé dans la direction de rayonnement des DEL (10), qui distribue et/ou démasque la lumière sur une surface partielle de la surface de sortie de la lumière, le guide d'ondes lumineuses (4, 6) présentant des ouvertures pour la lumière (41) associées aux DEL (10) et le guide d'ondes lumineuses (4, 6) présentant à sa surface un dispositif de protection servant d'élément d'écartement, **caractérisé en ce que** le dispositif de protection comprend des saillies (4K, 4L).

2. Luminaire selon la revendication 1, **caractérisé en ce que** la surface des saillies (4K, 4L) représente jusqu'à 20 % de la surface de l'ouverture pour la lumière (41).

3. Luminaire selon la revendication 1 ou 2, **caractérisé en ce que** le guide d'ondes lumineuses (4, 6) comprend un matériau translucide produisant une lumière diffuse et présente un matériau transparent dans une zone de passage direct placée directement dans un sens de rayonnement des DEL (10).

4. Luminaire selon la revendication 3, **caractérisé en ce que** le matériau transparent dans la zone de passage direct est conformé pour pouvoir être inséré dans le guide d'ondes lumineuses (4, 6).

5. Luminaire selon l'une des revendications précédentes, **caractérisé en ce que** le guide d'ondes lumineuses (4, 6) présente une goulotte d'éclairage et **en ce qu'**un réflecteur inséré (18) peut être inséré dans cette goulotte d'éclairage.

6. Luminaire selon la revendication 5, **caractérisé en ce que** la hauteur de la goulotte d'éclairage est environ 3 fois plus grande que sa largeur.
